# EUROPÄISCHE PATENTANMELDUNG

(11) **EP 0 713 078 A1**
(43) Veröffentlichungstag der Anmeldung: **22.05.1996**
(21) Anmeldenummer: 95117300.4
(22) Anmeldetag: 03.11.1995
(51) Int. Cl.: G01F 1/06, G01F 1/08

(54) **Messeinsatz für Flüssigkeitszähler**

(30) Priorität: 15.11.1994 DE 4440683
(71) Anmelder: E. Wehrle GmbH, D-78120 Furtwangen (DE)
(72) Erfinder: Krämer, Jürgen, D-78112 St. Georgen (DE); Pühler, Thomas, D-78098 Triberg (DE)
(74) Vertreter: Rackette, Karl, Dipl.-Phys. Dr.-Ing

(57) **Zusammenfassung**

Bei einem Meßeinsatz für Flüssigkeitszähler, insbesondere für Wasserzähler, ist zum Erzielen einer hohen Langzeitmeßgenauigkeit auch bei Durchströmen mit einen hohen Schwebstoffanteil führenden Flüssigkeiten zum Einbau in verschieden geformte Zählergehäuse (1) vorgesehen, einen mit Einlaßkanälen (31) und Auslaßkanälen (29) ausgestatteten Flügelbecher (27) im Bereich der Einlaßkanäle (31) mit einem Abschirmmantel (33) zu umgeben, der in einem Abstand von den Einlaßkanälen (31) einen Siebdeckel (37) mit sich in Einströmrichtung konisch erweiternden Sieböffnungen (38) trägt. In den Einlaßkanälen (31) sind den Querschnitt der Einlaßkanäle (31) erweiternde Ausbuchtungen vorgesehen. Dadurch ist die Meßgenauigkeit des Meßeinsatzes (7) von der Form des Zählergehäuses (1) weitgehend unabhängig und eine lange Einsatzdauer des Meßeinsatzes (7) auch bei einem hohen Schwebstoffanteil gewährleistet. Durch die Integration dieser Merkmale in einer beglaubigungsfähigen Einheit ist die Eichfähigkeit und Austauschbarkeit in unterschiedlich geformten Zählergehäusen (1) gewährleistet.

## Beschreibung

Die Erfindung betrifft einen Meßeinsatz für Flüssigkeitszähler, insbesondere für Wasserzähler, mit einem einen Meßraum mit einem Flügelrad umschließenden rundlichen Flügelbecher, mit in dem Flügelbecher vorgesehenen, in Längsrichtung des Flügelbechers getrennt voneinander in zwei Ebenen angeordneten Einlaßkanälen und Auslaßkanälen zur Zufuhr und Abfuhr von Flüssigkeit in beziehungsweise aus dem Meßraum, wobei die Einlaßkanäle wenigstens einen an einer Seitenwand des zugehörigen Einlaßkanales vorgesehenen Strömungswandler aufweisen.

Ein derartiger Meßeinsatz ist aus der EP 0 407 948 A1 bekannt. Dieser gattungsgemäße Meßeinsatz weist als Weiterbildung eines aus der DE 26 47 297 C3 bekannten Meßeinsatzes bei sich in Richtung eines Meßraumes verjüngenden Einlaßkanälen in den Flüssigkeitsstrom ragende Strömungswandler auf, die zu einer verbesserten Linearisierung der Meßkurve im unteren Durchflußbereich führen. Allerdings ist dieser Meßeinsatz durch eine hochspezifische Auslegung der Strömungswandler auf spezielle Zählergehäuse nicht in verschieden ausgeformten Zählergehäusen verwendbar. Weiterhin läßt die Kompensationswirkung der Strömungswandler bei Zusetzen mit Schwebstoffen nachteiligerweise nach, da die von den Strömungswandlern zu erzeugende Umlenkung von Teilströmen nur noch in eingeschränktem Umfang erfolgt.

Aus der DE 24 54 286 A1 ist eine Ausgestaltung eines Einlaßkanales bei einem Strömungsmesser bekannt, bei der durch eine abrupte Formänderung in den Seitenwänden der Einlaßkanäle in Gestalt einer Erweiterung Turbulenzen erzeugbar sind. Dadurch läßt sich zwar die Ansprechlinearität des Strömungsmessers verbessern, allerdings führt auch hier ein Zusetzen der Formunterbrechung zu einer Verschlechterung der Meßgenauigkeit.

Der Erfindung liegt die Aufgabe zugrunde, einen Meßeinsatz der eingangs genannten Art zu schaffen, der in verschieden geformte Zählergehäuse, insbesondere in Zählergehäuse älterer Bauart wie sogenannte WVG-(Wasserzähler-Vertriebs-Gesellschaft-) Gehäuse einbaubar ist und auch bei Flüssigkeiten mit einem hohen Schwebstoffanteil eine hohe Langzeitmeßgenauigkeit aufweist.

Diese Aufgabe wird erfindungsgemäß dadurch gelöst, daß der wenigstens eine Strömungswandler als eine den Querschnitt des zugehörigen Einlaßkanales vergrößernde, auf einem Teilabschnitt der Seitenwand eingebrachte Ausbuchtung ausgebildet ist und daß der die Einlaßkanäle aufweisende Abschnitt des Flügelbechers von einem Abschirmmantel umschlossen ist, der die Einlaßkanäle mit einem radialen Abstand umgibt, der in Längsrichtung über eine den Einlaßkanälen benachbarte Deckfläche des Flügelbechers vorsteht und der mit einem siebartigen Abschlußstück versehen ist.

Durch das Vorsehen von den Querschnitt der Einlaßkanäle vergrößernden Ausbuchtungen als Strömungswandler ist erreicht, daß sich Ablagerungen durch mitgeführte Schwebstoffe in den Einlaßkanälen im Übergangsbereich der Einlaßkanäle in den Meßraum auf die Langzeitmeßgenauigkeit weniger stark auswirken als Ablagerungen in herkömmlich gestalteten Einlaßkanälen. Durch das Umgeben der Einlaßkanäle mit einem Abschirmmantel und dem Abdecken des Abschirmmantels mit einem siebartigen Abschlußstück sind im Bereich der Einlaßkanäle von der Umgebung unbeeinflußte Strömungs-verhältnisse erzeugt, die von der Gestalt eines den Meßeinsatz aufnehmenden Zählergehäuses weitgehend unabhängig sind. Somit ist durch das Zusammenwirken der Merkmale des erfindungsgemäßen Meßeinsatzes bei verschieden geformten Zählergehäusen eine hohe Langzeit-meßgenauigkeit auch bei einem hohen Schwebstoffanteil erreicht.

Vorzugsweise sind die Einlaßkanäle und die Auslaßkanäle tangential bezüglich des Umfanges des Meßraumes ausgerichtet und der Meßeinsatz mit seiner Längsrichtung im wesentlichen rechtwinklig zu der Einströmrichtung der Flüssigkeit in dem Zählergehäuse angeordnet. Aufgrund der durch den Abschirmmantel erzwungenen Umlenkungen des zu messenden Flüssigkeitsstromes sind die Strömungsverhältnisse im wesentlichen durch den Aufbau des Meßeinsatzes festgelegt, so daß eine hohe, von der spezifischen Queranströmung im wesentlichen unabhängige Meßgenauigkeit erreicht ist.

Vorteilerhafterweise sind die mit rundlichen Übergängen angeformten Ausbuchtungen unmittelbar im Mündungsbereich der Einlaßkanäle in den Meßraum vorgesehen, so daß sowohl bei einem den Flügelbecher formenden Werkzeug als an dem Flügelbecher selbst scharfe Kanten im Einmündungsbereich in den Meßraum mit Nachteilen bei der Werkzeuglebensdauer beziehungsweise der Ausschußrate bei der Herstellung von Flügelbechern vermieden sind.

Weitere zweckmäßige Ausgestaltungen und Vorteile ergeben sich aus den Unteransprüchen und der nachfolgenden Beschreibung unter Bezug auf die Figuren der beigefügten Zeichnung, wobei
- Fig. 1: ein Zählergehäuse älterer Bauart in einer Schnittansicht mit einem Meßeinsatz gemäß einer Ausgestaltung der Erfindung darstellt,
- Fig. 2: einen Meßeinsatz in einer teilgeschnittenen Ansicht gemäß einer zweckmäßigen Ausgestaltung der Erfindung darstellt,
- Fig. 3: eine Ansicht auf eine innenseitige Bodenfläche eines Flügelbechers zeigt,
- Fig. 4: eine Ansicht auf die Deckfläche des Flügelbechers gemäß Fig. 3 mit tangential ausgerichteten Einlaßkanälen darstellt,
- Fig. 5: eine vergrößerte, ausschnittsweise Ansicht eines Einlaßkanales bei einem Flügelbecher gemäß Fig. 3 mit einer Ausbuchtung in einer Seitenwand des Einlaßkanales zeigt und
- Fig. 6: eine weitere Ausgestaltung eines Einlaßkanales mit je einer Ausbuchtung in beiden Seitenwänden eines Einlaßkanales darstellt.

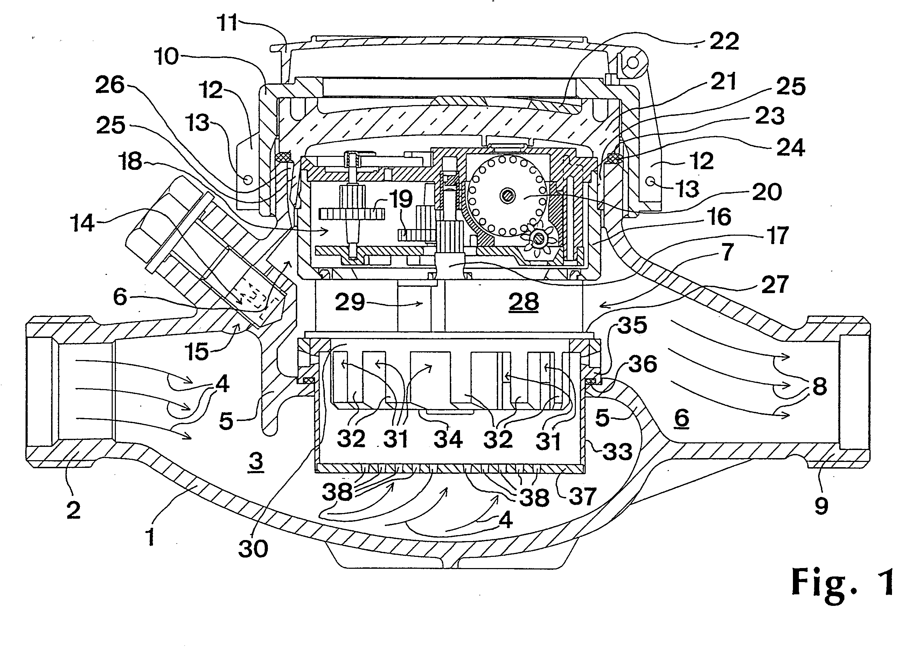

Fig. 1 zeigt in einer geschnittenen Ansicht ein Zählergehäuse 1 eines Wasserzählers herkömmlicher Bauart mit einem WVG- (Wasserzähler-Vertriebs-Gesellschaft-) Gehäuse. Von einem in Fig. 1 nicht dargestellten, an einen Zulaufanschluß 2 angeschlossenes Rohr zugeführt ist eine Zuströmkammer 3 in einer durch Zuströmpfeile 4 angedeuteten Richtung mit Wasser durchströmbar. Die Zuströmkammer 3 ist durch eine von einer runden Öffnung durchbrochenen Trennplatte 5 von einer Abströmkammer 6 getrennt, aus der durch einen in der Öffnung der Trennplatte 5 eingefügten Meßeinsatz 7 durchgetretenes Wasser in einer durch Abströmpfeile 8 angedeuteten Richtung in ein an einen Ablaufanschluß 9 des Zählergehäuses 1 angeschlossenes, in Fig. 1 nicht dargestelltes Rohr abführbar ist.

Auf das Zählergehäuse 1 ist eine Kopfverschraubung 10 mit einer mittig angeordneten Sichtscheibe aus Mineralglas oder Kunststoff sowie mit einem schwenkbaren Klappdeckel 11 aufschraubbar, wobei der Meßeinsatz 7 als selbständig eichfähige Einheit und als Wechselpatrone austauschbar paßgenau in das Zählergehäuse 1 einfügbar ist. An der Kopfverschraubung 10 sind Plombierlaschen 12 mit Bohrungen 13 vorgesehen, durch die ein in Fig. 1 nicht dargestellter Plombierdraht zum Plombieren des Wasserzählers durchführbar ist.

Das in Fig. 1 dargestellte Zählergehäuse 1 weist als ein Dichtelement eine Regulierschraube 14 auf, mit der bei einer Ausstattung des Wasserzählers mit herkömmlichen Meßeinsätzen ein Wassernebenstrom von der Zuströmkammer 3 in die Abströmkammer 6 durch eine in dem Zählergehäuse 1 vorhandene Nebenstromöffnung 15 hindurch einstellbar ist. Die Regulierschraube 14 ist bei einer Ausstattung des Wasserzählers mit dem in Fig. 1 dargestellten Meßeinsatz 7 in einer die Nebenstromöffnung 15 vollständig verschließenden Stellung blockiert.

Der Meßeinsatz 7 weist einen Werkbecher 16 auf, der ein durch eine Flügelradwelle 17 angetriebenes Zählwerk 18 mit Zahnrädern 19 und Zahlenrollen 20 umgibt.

Der Werkbecher 16 ist auf seiner der Kopfverschraubung 10 zugewandten Seite mit einem Schauglas 21 abgedeckt, auf dem ein Aufsteckschild 22 angebracht ist. Das Aufsteckschild 22 ist mit den Kenndaten des Meßeinsatzes 7 bedruckt und in das Schauglas 21 einschiebbar. Das Schauglas 21 weist eine ringförmig umlaufende Schulter 23 auf, in die eine Dichtung 24 zur Abdichtung des Wasserzählers bei Anziehen der Kopfverschraubung 10 einfügbar ist. Das Schauglas 21 weist in diesem Ausführungsbeispiel Zwei Rastfedern 25 auf, die in beispielsweise in eine in das Zählergehäuse 1 eingebrachte Rastnut 26 einrastbar sind. Dadurch ist eine definierte Arretierung des Meßeinsatzes 7 in dem Zählergehäuse 1 unter verschiedenen winkligen Ausrichtungen möglich. In der Darstellung gemäß Fig. 1 ist auf der Seite der Regulierschraube 14 eine in eine Rastnut 26 vorspringende Rastfeder 25 dargestellt, während eine in Richtung des Ablaufanschlusses 9 weisende Rastfeder 25 zwischen dem Werkbecher 16 und dem Zählergehäuse 1 eingespannt ist.

Der Meßeinsatz 7 weist einen rundlichen Flügelbecher 27 auf, der aus einem Auslaßabschnitt 28 mit in die Abströmkammer 6 mündenden, in einer Ebene angeordneten Auslaßkanälen 29 und einem Einlaßabschnitt 30 gebildet ist. Der Einlaßabschnitt 30 weist mehrere in einer von den Auslaßkanälen 29 mit einem Abstand versehene, in einer Ebene angeordnete Einlaßkanäle 31 auf, die durch Trennrippen 32 voneinander getrennt sind.

Die Einlaßkanäle 31 sind von einem als Abschirmmantel dienenden Becherteil 33 umschlossen, das die Einlaßkanäle 31 mit einem radialen Abstand umgibt und in Längsrichtung über eine den Flügelbecher 27 abschließenden Deckfläche 34 vorsteht. Das Becherteil 33 liegt mit einem Vorsprung 35 auf der Trennplatte 5 des Zählergehäuses 1 auf. Der Vorsprung 35 ist mit einer Dichtnut versehen, in die eine Dichtung 36 zum Abdichten der in die Trennplatte 5 eingebrachten Öffnung vorgesehen ist. Das Becherteil 33 ist an seinem von dem Flügelbecher 27 wegweisenden Ende mit einem als Abschlußstück dienenden Siebdeckel 37 versehen. Der Siebdeckel 37 ist von im Verhältnis zu seinem Durchmesser kleinen Sieböffnungen 38 durchbrochen, so daß in die Zuströmkammer 3 eintretendes Wasser unter Turbulenzbildung in den Meßeinsatz 7 einströmen kann.

Der in Fig. 1 dargestellte Meßeinsatz 7 ist mit seiner Längsrichtung rechtwinklig zu der Zuströmrichtung des durch den Zulaufanschluß 2 eintretenden Wassers ausgerichtet, so daß durch das Becherteil 33 umgelenkt das zuströmende Wasser als erstes von einer in Bezug auf den rundlichen Meßeinsatz 7 radialen Zuströmrichtung in axialer Richtung umgelenkt durch den Siebdeckel 37 durchtritt und als zweites nach erneut radialer Umlenkung in die Einlaßkanäle 31 eintritt.

Der Siebdeckel 37 ist wenigstens mit einem etwa einem Zehntel, vorzugsweise einem Fünftel seines Durchmessers entsprechenden axialen Abstand von der Deckfläche 34 des Flügelbechers 27 angeordnet. Der radiale Abstand des Becherteiles 33 von dem Einlaßabschnitt 30 entspricht wenigstens etwa einem Fünfzigstel, vorzugsweise etwa einem Fünfundzwanzigstel seines Durchmessers.

Durch die Umlenkungen in der Zuströmrichtung sind die Meßgenauigkeit des Meßeinsatzes 7 herabsetzende Einflüsse aufgrund des Aufbaus und Alterungserscheinungen des Zählergehäuses 1 vermindert.

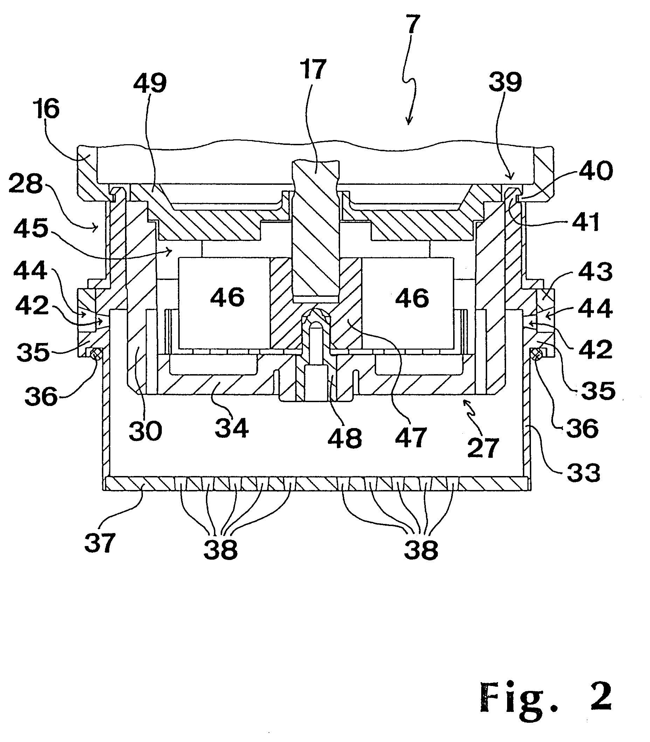

Fig. 2 zeigt in einer Schnittansicht den Einlaßabschnitt 30 des Flügelbechers 27 mit dem ihn umgebenden Becherteil 33. Das Becherteil 33 ist mit einer zerstörungsfrei nicht zu lösenden Schnappverbindung 39 aus einem in einer Schnappkante 40 des Werkbechers 16 eingreifenden Schnapphaken 41 mit dem Werkbecher 16 verbunden. Im Bereich des Einlaßabschnittes 30 des Flügelbechers 27 weist das Becherteil 33 Bypaßöffnungen 42 auf, die mit einem das Becherteil 33 umgebenden, drehbaren Bypaßring 43, der Ringöffnungen 44 aufweist, zur Regulierung eines Nebenstromes bei der Eichung des Meßeinsatzes 7 mehr oder weniger verschließbar sind.

Der mit einem axialen Abstand von dem Flügelbecher 27 angeordnete Siebdeckel 37 weist in dem in Fig. 2 dargestellten Ausführungsbeispiel Sieböffnung 38 auf, die sich in Richtung des Flügelbechers 27 konisch erweitern. Dadurch lagern sich im Wasser vorhandene Schwebstoffanteile, die trotz einer Stauwirkung des Siebdeckels 37 mit einem Ablagern von Schwebstoffanteilen in der Zuströmkammer 3 in das Innere des Meßeinsatzes 7 gelangen, aufgrund der Strömungsverlangsamung nach Eintritt in die konisch auseinanderlaufenden Sieböffnungen 38 bevorzugt in Bereichen mit gegenüber dem Eintrittsdurchmesser vergrößerten Durchmessern ab, so daß der effektive Durchlaßquerschnitt der Sieböffnungen 38 trotz der Ablagerungen weniger als bei zylindrischen oder sich in Richtung des Flügelbechers 27 verjüngenden konischen Ausnehmungen beeinträchtigt ist.

Der Flügelbecher 27 umschließt einen Meßraum 45, in dem ein mit Flügeln 46 versehenes Flügelrad 47 auf einem zentrischen Grundstift 48 drehbar gelagert ist. Bei Durchströmen des Meßraumes 45 mit einer Flüssigkeit ist das Flügelrad 47 in Drehung versetzt, so daß über die fest mit dem Flügelrad 47 verbundene Flügelradwelle 17 das Zählwerk 18 antreibbar ist. Der Meßraum 45 ist in Richtung des Zählwerkes 18 mit einem Werkbecherboden 49 abgeschlossen. Es versteht sich, daß die in Fig. 2 dargestellte Ausführung als Naßläufer durch Abstützen des Flügelbechers 27 mittels einer druckfesten Metallplatte auch als Trockenläufer ausführbar ist, bei dem die Drehzahl des Flügelrades 47 mittels einer Magnetkupplung oder einer elektronischen Abtastung ableitbar ist.

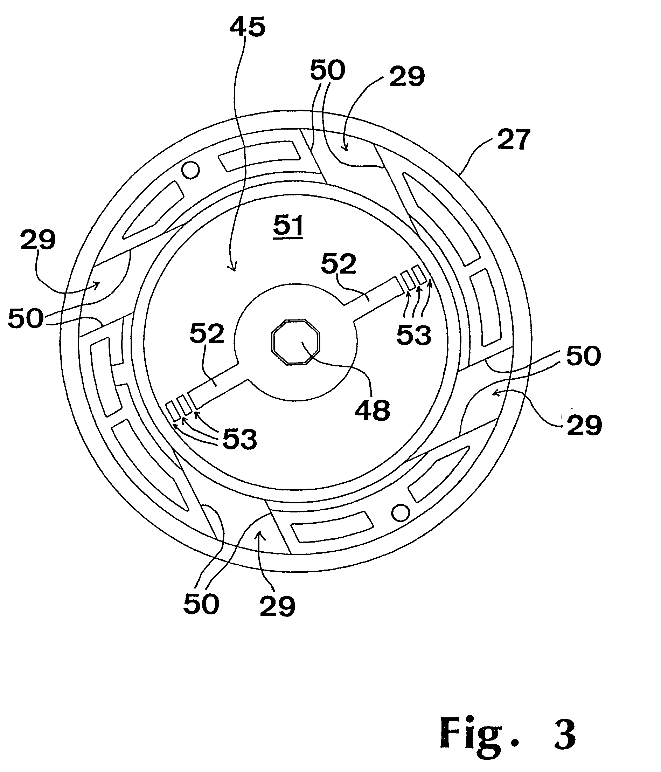

Fig. 3 zeigt in einer Draufsicht den Meßraum 45 des Flügelbechers 27 bei abgenommenem Werkbecher 16 und entnommenen Flügelrad 47. In dem in Fig. 3 dargestellten Ausführungsbeispiel sind die vier Auslaßkanäle 29 tangential in Bezug auf einen in den Meßraum 45 gelegten Kreisumfang mit paarweise zueinander parallelen Auslaßseitenwänden 50 ausgerichtet. Auf der innenseitigen Bodenfläche 51 des Flügelbechers 27 sind in diesem Ausführungsbeispiel zwei Staurippen 52 vorgesehen, die sich radial von der zentrischen Bohrung zur Aufnahme des Grundstiftes 48 miteinander fluchtend nach außen erstrecken.

In dem in Fig. 3 dargestellten Ausführungsbeispiel sind in den radial außen liegenden Endbereichen der Staurippen 52 mehrere Ringnuten 53 eingebracht, die sich in verschiedenen radialen Abständen quer zu der Längsrichtung der Staurippen 52 erstrecken. Die Ringnuten 53 verringern die Stauwirkung der Staurippen 52 im Vergleich zu durchgehenden Staurippen und erhöhen dementsprechend die Drehzahl des Flügelrades 47. Bei einer längeren Einsatzdauer des Meßeinsatzes 7 bei Durchströmen mit einen hohen Schwebstoffanteil führenden Flüssigkeiten setzen sich die Ringnuten 53 allmählich zu, so daß der wirksame Querschnitt der Staurippen 52 erhöht ist. Die dadurch herbeigeführte Erniedrigung der Drehzahl des Flügelrades 47 wirkt einer durch Zusetzen der Einlaßkanäle 31 bewirkten Erhöhung der Drehzahl des Flügelrades 47 und damit einer Plusabweichung in der Anzeige des Zählwerkes 18 entgegen.

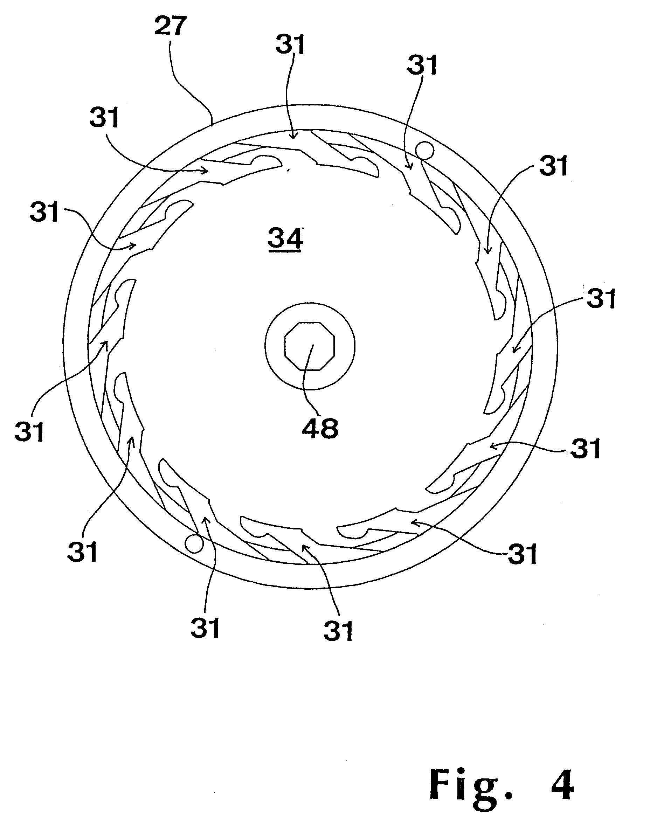

Fig. 4 zeigt den Flügelbecher 27 in einer Draufsicht auf die Deckfläche 34. Bei dem in Fig. 4 dargestellten Flügelbecher 27 sind die zwölf Einlaßkanäle 31 tangential in Bezug auf einen innenliegenden Kreisumfang des Meßraumes 45 ausgerichtet.

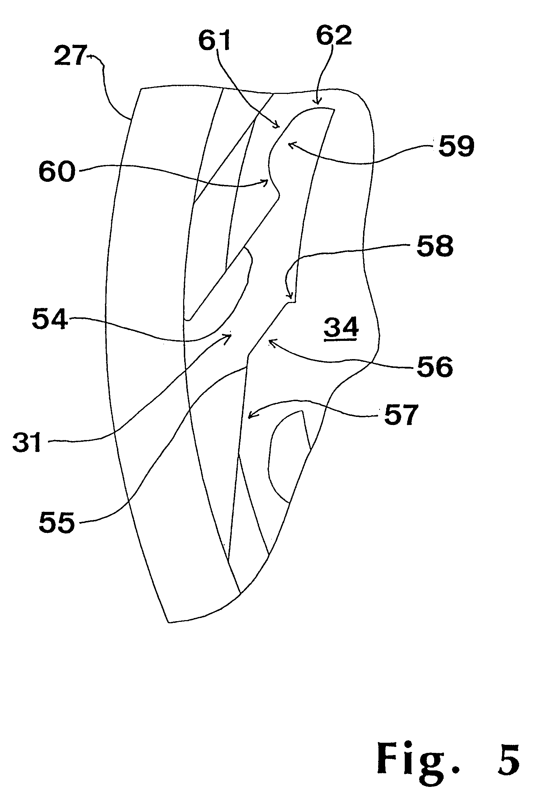

Fig. 5 zeigt in Draufsicht einen vergrößerten Ausschnitt des Flügelbechers 27 gemäß Fig. 4 im Bereich eines Einlaßkanales 31. Der Einlaßkanal 31 ist seitlich von einer geraden Einlaßseitenwand 54 und einer gewinkelten Einlaßseitenwand 55 begrenzt. Die gewinkelte Einlaßseitenwand 55 weist einen zu der geraden Seitenwand 54 parallelen Innenabschnitt 56 und im Außenbereich einen den Querschnitt des Einlaßkanales 31 vergrößernden, gegenüber dem Innenabschnitt 56 abgewinkelten Außenabschnitt 57 auf. Im an den Meßraum 45 angrenzenden Endbereich des Innenabschnittes 56 ist eine Abschrägung 58 vorgesehen, die im wesentlichen rechtwinklig auf dem Umfang des Meßraumes 45 steht.

Die gerade Einlaßseitenwand 54 ist in ihrem an den Meßraum 45 angrenzenden Endbereich auf etwa einem Drittel ihrer Länge durch eine den Querschnitt des Einlaßkanales 31 vergrößernde Ausbuchtung 59 gekrümmt. Die mit rundlichen Übergängen an die gerade Einlaßseitenwand 54 angeformte Ausbuchtung 59 weist einen rundlichen Leeabschnitt 60, einen im wesentlichen parallel zu der geraden Einlaßseitenwand 54 verlaufenden Parallelabschnitt 61 und einen rundlichen, die Ausbuchtung schließenden Luvabschnitt 62 auf. Die Tiefe der Ausbuchtung 59 entspricht etwa der halben Breite des Einlaßkanales 31 im Bereich des parallelen Abschnitts der Seitenwände 54, 55.

Durch das Vorsehen der als Strömungswandler wirkenden Ausbuchtungen 59 am Übergang der Einlaßseitenwand 54 in den Meßraum 45 sind die Einflüsse von Ablagerungen in diesem Bereich reduziert, und somit ist die Langzeitmeßgenauigkeit des Meßeinsatzes 7 auch bei einen hohen Schwebstoffanteil führenden Flüssigkeiten gegenüber Meßeinsätzen, die Einlaßkanäle mit glatten Seitenwänden aufweisen, deutlich erhöht.

Bei der in Fig. 5 dargestellten Ausführung der Einlaßkanäle 31 mit im Mündungsbereich in dem Meßraum 45 eingebrachten Abschrägungen 58 und Ausbuchtungen 59 an den Einlaßseitenwänden 54, 55 ist vorteilhafterweise das den Flügelbecher 27 formende Werkzeug ohne spitzwinklig zulaufende Kanten im Mündungsbereich des Einlaßkanales 31 in den Meßraum 45 herstellbar. Neben einer längeren Lebenszeit des Werkzeuges ist dadurch auch der Ausschuß aufgrund von Gratbildungen oder Ausschartungen an spitzwinkligen Kanten des Flügelbechers 27 reduziert.

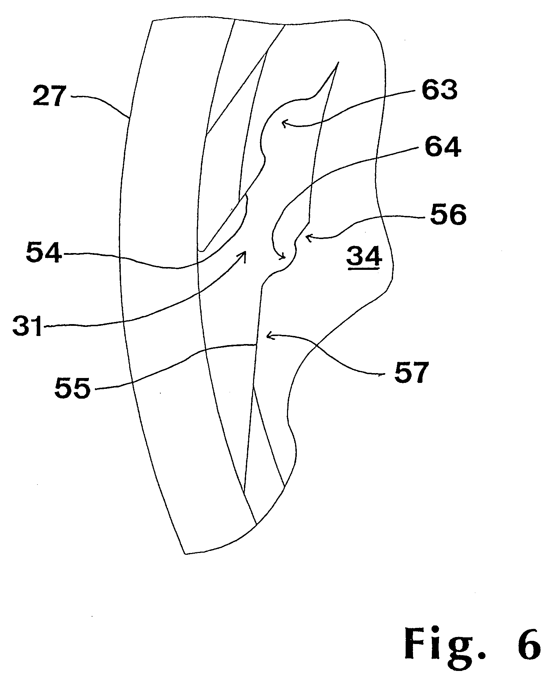

Fig. 6 zeigt eine gegenüber Fig. 5 abgewandelte Ausgestaltung eines Einlaßkanales 31 bei einer entsprechenden Anordnung der Einlaßseitenwände 54, 55. Gemäß der in Fig. 6 dargestellten Ausgestaltung ist in die gerade Einlaßseitenwand 54 auf einem in Richtung auf den Meßraum 45 im vorderen Drittel befindlichen Teilabschnitt eine Ausbuchtung 63 in Gestalt eines an den geraden Verlauf der Einlaßseitenwand 54 rundlich angeformten Zylinderabschnittes vorgesehen. Im Innenabschnitt 56 der gewinkelten Einlaßseitenwand 55 ist eine weitere zylinderartig ausgestaltete und mit rundlichen Übergängen an die Einlaßseitenwand 55 angeformte Ausbuchtung 64 vorgesehen. Diese Ausgestaltung zeichnet sich durch eine besonders hohe Meßgenauigkeit des Meßeinsatzes 7 aus.

## Patentansprüche

1. Meßeinsatz für Flüssigkeitszähler, insbesondere für Wasserzähler, mit einem einen Meßraum (45) mit einem Flügelrad (47) umschließenden rundlichen Flügelbecher (27), mit in dem Flügelbecher (27) vorgesehenen, in Längsrichtung des Flügelbechers (27) getrennt voneinander in zwei Ebenen angeordneten Einlaßkanälen und Auslaßkanälen (29) zur Zufuhr und Abfuhr von Flüssigkeit in beziehungsweise aus dem Meßraum (45), wobei die Einlaßkanäle wenigstens einen an einer Seitenwand des zugehörigen Einlaßkanales vorgesehenen Strömungswandler aufweisen, **dadurch gekennzeichnet**, daß der wenigstens einen Strömungswandler als eine den Querschnitt des zugehörigen Einlaßkanales (31) vergrößernde, auf einem Teilabschnitt der Seitenwand (54, 55) eingebrachte Ausbuchtung (59, 63, 64) ausgebildet ist und daß der die Einlaßkanäle (31) aufweisende Abschnitt (30) des Flügelbechers (27) von einem Abschirmmantel (33) umschlossen ist, der die Einlaßkanäle (31) mit einem radialen Abstand umgibt, der in Längsrichtung über eine den Einlaßkanälen (31) benachbarten Deckfläche (34) vorsteht und der mit einem siebartigen Abschlußstück (37) versehen ist.

2. Meßeinsatz nach Anspruch 1, dadurch gekennzeichnet, daß jeder Einlaßkanal (31) mit wenigstens einer rundlichen Ausbuchtung (59, 63, 64) versehen ist.

3. Vorrichtung nach Anspruch 1 oder 2, dadurch gekennzeichnet, daß die wenigstens eine Ausbuchtung (59, 63, 64) im mündungsnahen Bereich des Einlaßkanales (31) in den Meßraum (45) angeordnet ist.

4. Meßeinsatz nach einem der Ansprüche 1 bis 3, dadurch gekennzeichnet, daß die Einlaßkanäle (31) tangential ausgerichtet in den Meßraum (45) münden.

5. Meßeinsatz nach Anspruch 4, dadurch gekennzeichnet, daß eine Ausbuchtung (59) im unmittelbar an den Meßraum (45) angrenzenden Teilabschnitt der spitzwinklig auf den Umfang des Meßraumes (45) zulaufenden Seitenwand (54) des Einlaßkanales (31) angeordnet ist.

6. Meßeinsatz nach einem der Ansprüche 3 bis 5, dadurch gekennzeichnet, daß die stumpfwinklig auf den Umfang des Meßraumes (45) zulaufende Seitenwand (55) des Einlaßkanals (31) im Mündungsbereich eine im wesentlichen rechtwinklig auf den Umfang des Meßraumes (45) zulaufende Abschrägung (58) aufweist.

7. Meßeinsatz nach einem der Ansprüche 1 bis 6, dadurch gekennzeichnet, daß die Tiefe einer Ausbuchtung (59) etwa der halben Breite des Einlaßkanales (31) entspricht.

8. Meßeinsatz nach einem der Ansprüche 1 bis 7, dadurch gekennzeichnet, daß der Teilabschnitt der Seitenwand (54), über den sich eine Ausbuchtung (59, 63) erstreckt, etwa einem Drittel der Länge der zugeordneten Seitenwand (54) entspricht.

9. Meßeinsatz nach einem der Ansprüche 1 bis 8, dadurch gekennzeichnet, daß der Abschirmmantel (33) über eine Schnappverbindung (39, 40, 41) mit einem Werkbecher (16) des Meßeinsatzes (7) verbunden ist.

10. Meßeinsatz nach einem der Ansprüche 1 bis 9, dadurch gekennzeichnet, daß der Abschirmmantel (33) im Bereich der Einlaßkanäle (31) wenigstens eine Bypaßöffnung (42) aufweist.

11. Meßeinsatz nach Anspruch 10, dadurch gekennzeichnet, daß der Abschirmmantel (33) im Bereich der Bypaßöffnungen (42) von einem drehbar in der Ebene der Bypaßöffnungen (42) vorgesehenen, mit Ringöffnungen (44) ausgestatteten Bypaßring (43) umgeben ist.

12. Meßeinsatz nach einem der Ansprüche 1 bis 11, dadurch gekennzeichnet, daß das Abschlußstück plattenartig als Siebdeckel (37) ausgebildet ist und eine Vielzahl von Sieböffnungen (38) aufweist.

13. Meßeinsatz nach Anspruch 12, dadurch gekennzeichnet, daß die Sieböffnungen (38) sich in Richtung des Flügelbechers (27) konisch erweiternd ausgebildet sind.

14. Meßeinsatz nach Anspruch 12 oder 13, dadurch gekennzeichnet, daß der Siebdeckel (37) wenigstens mit einem Abstand von der Deckfläche (34) angeordnet, der wenigstens etwa einem Zehntel des Durchmessers des Abschirmmantels (33) entspricht.

15. Meßeinsatz nach einem der Ansprüche 1 bis 14, dadurch gekennzeichnet, daß der Meßeinsatz (7) mit seiner Längserstreckung rechtwinklig zu der Einströmrichtung eines Wasserzählers angeordnet ist.

16. Meßeinsatz nach einem der Ansprüche 1 bis 15, dadurch gekennzeichnet, daß der Meßeinsatz (7) selbständig eichfähig und als Wechselpatrone austauschbar ist.
